# EUROPEAN PATENT SPECIFICATION

(11) **EP 2 153 049 B1**
(45) Date of publication and mention of the grant of the patent: **21.12.2011**
(21) Application number: 07748202.4
(22) Date of filing: 04.06.2007
(51) Int. Cl.: F02K 1/38

(54) **System for mixing gas flows in a gas turbine engine, corresponding gas turbine engine and aircraft engine**
System zum Mischen von Gasströmen in einem Gasturbinentriebwerk, zugehöriges Gasturbinentriebwerk und Flugzeugtriebwerk
Système destiné à mélanger des flux de gaz dans un moteur à turbine à gaz, moteur à turbine à gaz et moteur d'avion associés

(30) Priority: 22.05.2007 SE 0701240
(43) Date of publication of application: 17.02.2010
(73) Proprietor: Volvo Aero Corporation, 46181 Trollhättan (SE)
(72) Inventor: OLAUSSON, Martin, S-417 20 Göteborg (SE); GUSTAFSSON, Bernhard, S-461 71 Trollhättan (SE)
(74) Representative: Fröhling, Werner Otto
(86) International application number: PCT/SE2007/000539
(87) International publication number: WO 2008/143558

(56) References cited:
- US-A- 5 154 052
- US-A- 5 269 139
- US-A- 5 372 006
- US-A- 5 771 681

## Description

### TECHNICAL FIELD

The invention relates to a system for mixing gas flows in a gas turbine engine, wherein the system comprises an annular wall structure, which internally delimits a channel for a first gas flow. The invention further relates to a gas turbine engine comprising the mixing system and an aircraft engine comprising the gas turbine engine. The invention is particularly directed at a system for reducing noise from an aircraft engine.

### BACKGROUND ART

Noise generated by aircraft jet engines during takeoff and landing is a matter of serious concern in most metropolitan areas of the world. In many areas where people live or work adjacent to airports they may be significantly affected by aircraft noise. Many municipalities have taken action to require reduction in aircraft noise. Much work has been done on designing turbofan aircraft engines to reduce noise levels.

Generally, in turbofan jet aircraft engines, the engine airflow is split into two parts as it passes through the engine, i.e. the primary or core flow and the fan or bypass flow. The primary or core flow passes through the low pressure and high pressure compressors and into the combustion chamber where fuel is mixed with the high pressure air and burned. The core flow then passes through the high and low pressure turbines and into the exhaust duct. The fan or bypass air flow only passes through the fan and is routed around the core engine and into the exhaust duct. In low bypass ratio confluent turbofan nacelles, the two flows enter into the exhaust duct at approximately equal pressure but at very different temperatures. Examples of temperature may be approximately 110° C for the bypass flow and approximately 600° C for the core flow. The two flows will mix as they exhaust through the exhaust end, or tailpipe of the jet engine. The exhaust jet exits the engine at a more uniform and higher velocity, which. generates a large part of the engine jet noise.

One apparatus which has been developed and which has achieved beneficial results in the noise reduction of turbofan aircraft engines is the flow mixer of the multi-channel or multi-lobe inverted flow type. Examples of use of such mixers for noise suppression are found in the U.S. Patents 4,117,671 and 4,077,206. These flow mixers mix the two gas flows to cause the gas flowing through the tailpipe to flow at the same velocity. These flow mixers have been credited with noise reduction in the range of 3.5 to 4.5 decibels (db) in the Effective Perceived Noise Level (EPNL), depending upon the engine cycle and bypass ratio. While this noise reduction is helpful, it is not sufficient in itself to solve all of the low bypass turbofan engine noise problems, and for this reason the exhaust flow mixer has had a limited commercial application.

To obtain larger magnitudes of noise reduction in jet engines, a traditional approach has been to mix ambient air flow with the jet engine gas flow to reduce jet velocity and associated noise. An example of such a solution is shown in US Patent 3,710,890. In order to provide a relatively large noise reduction, large ejector inlets with high secondary air flows have been used, which have resulted in unacceptable levels of net thrust loss at cruise speeds.

US 5154052 A discloses an exhaust assembly which is provided for a gas turbine engine effective for propelling an aircraft from takeoff through subsonic and supersonic velocity. The assembly includes a casing, a variable area converging-diverging nozzle attached to the casing and including a first throat and an outlet for channeling exhaust gases received from the core engine. A plurality of retractable chutes are disposed upstream of the nozzle outlet and are positionable in a deployed position forming a converging nozzle having a second throat with a flow area less than that of the first throat. Means are provided for channeling air along aft facing surfaces of the chutes into the CD nozzle for mixing with the exhaust gases when the chutes are disposed in the deployed position for reducing noise from the exhaust gases.

US 5372006 A discloses a thrust reverser system for a turbine engine of the type having a central relatively hot gas generator nozzle conducting a core flow and a relatively cold duct conducting a fan flow and surrounding the hot flow, a pair of thrust reverser door, each of the doors being pivotally mounted on an axis which is substantially diametrically positioned with respect to the exhaust nozzle of the engine so as to pivot between a stowed position in which the doors are out of the direct path of exhaust from the engine and a deployed position in which the doors are in the path of the engine exhaust for deflecting the exhaust and creating a braking thrust.

US 5269139 A discloses a jet engine, where there is an outer housing, an engine, a mixing section, and an exhaust section. Ambient air is drawn into the mixing section. The gaseous exhaust from the core engine is directed through primary passageway segments in the mixing section, and the ambient air that is drawn into the mixing section means flows into secondary passageway segments in the mixing section.

US 5771681 A discloses a fluid mixing apparatus for mixing primary exhaust and secondary airflow in a turbofan engine with provision for changing the ratio of secondary airflow to primary exhaust cross-sectional areas in the mixing plane. The mixing apparatus includes a segmented annulus attached to the aft end of an engine generator casing, the annulus having a plurality of segments of which at least a portion are movable segments hingedly connected to the generator.

### SUMMARY OF THE INVENTION

One purpose of the invention is to achieve a gas mixing system for a gas turbine engine, which creates conditions for a reduced noise during at least part of the operating range of the engine and minimal impact on engine performance.

This purpose is solved by means of a mixing system according to claim 1. Thus, it is solved by a system for mixing gas flows in a gas turbine engine, wherein the system comprises an annular wall structure, which internally delimits a channel for a first gas flow, characterized in that the wall structure comprises a plurality of first wall portions, that at least one of the first wall portions is movably arranged in a radial direction between a first position and a second position for mixing an external gas flow with the first gas flow.

Moreover, the wall structure is movably arranged between an advanced axial position and a retracted axial position, wherein the advanced axial position corresponds to that the movable first wall portions are arranged in the first radial position and the retracted axial position corresponds to that the movable first wall portions are arranged in the second radial position. Preferably, the system comprises a link arrangement adapted to displace the movable first wall portions between the first and second radial positions as the wall structure is advanced and retracted, respectively between the axial positions.

In this context, the term "annular" should be interpreted to include an annular element having a continuous or a partial extent in a circumferential direction. For instance, an annular element may comprise a circular ring or a segment thereof. Further, the term "annular" is not restricted to a circular shape, but may comprise any other shapes, such as ellipsoidal and rectangular shapes.

The mixing system is preferably applied in a turbofan engine, for instance a low bypass turbofan engine, which may have both fan and core exhaust air flow streams arranged concentrically at its exhaust end and exiting the engine along the longitudinal axis thereof.

In the subsequent text, terms such as "upstream", "downstream", "forward", "rear" refers to the location of individual parts or components in relation to the direction of gas flow through the engine from the front to the rear thereof.

More particularly, the noise during take-off may be reduced by reducing the speed and temperature of the exhaust jet. This may be achieved by means of the inventive mixing system in that ambient air flow is introduced during take-off, wherein a further effect is that the mass flow is increased. A high by-pass ratio is advantageous during take-off. However, during cruise conditions, a larger part of the air flow through the engine should pass the combustion chamber, wherein a lower by-pass ratio is achieved. The inventive mixing system creates conditions for achieving both the high by-pass, ratio during take-off and the low by-pass ratio during cruising conditions.

More specifically, the inventive mixing system creates conditions for mixing ambient air in the outlet jet from the engine in an efficient way while also providing for varying the area of the inner gas flow and/or an outer gas flow.

The movable first wall portions form adjustable flow controlling means, in the form of movable control surfaces, ramps, or similar. Each such movable first wall portion may comprise a sheet of metal, metal alloy or composite material, or a similar material suitable for use in the exhaust nozzle of a turbofan engine.

According to a preferred embodiment, the first wall portions form a circumferentially continuous nozzle when the movable first wall portion is in the second position. With regard to an aircraft engine, the second position is preferably applied during cruise conditions. Preferably, the end of this first nozzle forms the narrowest part of the exhaust nozzle. Preferably, the wall structure is configured to obstruct mixing of the first gas flow with the external second gas flow (ambient air) when the first movable wall portions are in the second radial position.

According to a further preferred embodiment, there is a gap between two adjacent movable first wall portions in a circumferential direction of the annular wall structure when they are arranged in the first position. Preferably, the wall structure is configured to allow mixing of the first gas flow with the external second gas flow (ambient air) when the first movable wall portions are in the first radial position. More particularly, the ambient air may be introduced between two adjacent movable first wall portions. With regard to an aircraft engine, the first position is preferably applied during take-off conditions.

According to a further preferred embodiment, an edge of the movable first wall portion, which forms an end in an axial direction of the annular wall structure, defines a first inner radius in the first position, and a second inner radius in the second position, wherein the first inner radius is larger than the second inner radius. The movable first wall portion is preferably pivotable between the first position and the second position. Preferably, a forward edge of the movable first wall portion is attached to the other part of the wall structure via a pivot joint, wherein a rear edge of the movable first wall portion forms the free end. Preferably, each of the movable first wall portions is pivotable about an axis extending at right angles relative to an axial direction of the annular wall structure.

The first wall portions may have a planar or curved cross-section in a radial plane through the wall structure. The width and/or curvature of each first wall portion in a radial plane through the engine is determined by the number of wall portions and/or the diameter of the convergent nozzle in said plane when the movable first wall portions are pivoted into their second position. According to one example, the wall structure is attached to a rear end of an upstream first exhaust shroud. The length, width and thickness of the first wall portions are dependent on factors such as the length and diameter of the rear section of the upstream first exhaust shroud, the number of first wall portions, the angle of the first wall portions in their second position, the maximum aerodynamic force acting on the first wall portions etc. The width of each first wall portion may be constant or tapering towards the end of it in the axial direction. Displacement of the movable first wall portions may be achieved by arranging their front ends so that each wall portion is pivotable about a tangential axis. In this way the ramps can be displaced in a plane through the central axis of the turbofan engine and be placed either in a pivoted second position, forming a conical nozzle, or in a level first position, substantially coaxial with and forming an extension of the upstream first exhaust shroud.

According to a further preferred embodiment, the wall structure comprises a plurality of second wall portions, that each first movable wall portion is radially movably arranged between two adjacent second wall portions: The adjacent second wall portions have opposite parallel guide surfaces and opposite lateral edges of the first wall portion are positioned in contact with, or in the close vicinity of, the guide surfaces of the second wall portions in both said first and second position. Thus, a guide surface of each of the second wall portions, which surface faces the movable first wall portion, has a main extension substantially in a radial direction of the annular wall structure. These guide surfaces are preferably fixed with regard to the movable first wall portions and may be attached to the rear end of the upstream first exhaust shroud. In other words, the guide surfaces are arranged in parallel to the direction of movement of the first movable wall portions.

Each pair of guide surfaces associated with a movable first wall portion is connected by a rigid first wall portion, wherein these rigid first wall portions cooperate with the movable first wall portion to form the exhaust nozzle. As for the first wall portions, the width and/or curvature of each of them in a radial plane through the engine is determined by the number of first wall portions and the minimum and maximum diameter of the convergent nozzle when the movable first wall portions are pivoted into their second radial position.

According to one example, the advanced and retracted positions of the wall structure may be achieved by an axial displacement of the first upstream exhaust shroud. The first exhaust shroud may be movably connected to and displaceable relative to an external turbine shroud. This displacement may be achieved by allowing the forward end of the first exhaust shroud to be displaced inside an inner surface or outside an outer surface of a rear section of the turbine shroud. Alternatively, the forward end of the first exhaust shroud may be displaced into a space between an inner and an outer surface of a rear section of the turbine shroud. According to one example, the displaceable first exhaust shroud is a fan air shroud.

In this example, each of the adjustable first wall portions may be arranged to be adjusted by an individual or a common mechanical linkage mounted between the movable first wall portions and a stationary second exhaust shroud. The linkages may be attached to a rear section of each of the movable first wall portions, which are mounted to the rear section of the first exhaust shroud. The mechanical linkages are preferably, but not necessarily, mounted between the movable first wall portions on the first exhaust shroud and a front section of the second exhaust shroud. The mechanical linkages may comprise individual linkages connecting each first flow controlling means the second exhaust shroud. Alternatively, the mechanical linkages connecting each movable first wall portions and the second exhaust shroud are interconnected to ensure simultaneous actuation of the movable first wall portions. In this way the mechanical linkages are actuated by the relative displacement between the first and second exhaust shrouds.

According to a second example, each movable first wall portions is arranged to be adjusted by an individual or a common mechanical linkage mounted between the movable first wall portions and the turbine shroud. The linkages may be attached between the rear sections of each of the movable first wall portions, via the first exhaust shroud, to a rear section of the turbine shroud. In this way the mechanical linkages are actuated by the relative displacement between the first exhaust shroud and the turbine shroud.

According to a second alternative embodiment, each movable first wall portion described above is arranged to be adjusted by individual or one or more common actuators. As described above, a mechanical linkage may be attached to the rear section of each of the movable first wall portions, which are mounted to the rear section of the first exhaust shroud. The actuator or actuators may comprise electrically, hydraulically or mechanically operated actuators.

According to a first example, the mechanical linkages may be attached to individual actuators or one or more common actuators, which are mounted to the rear section of the first exhaust shroud forward of the first flow controlling means. According to a second example, the mechanical linkages may be attached to individual actuators or one or more common actuators, which are mounted to the front section of the second exhaust shroud. According to a third example, the mechanical linkages may be attached to individual actuators or one or more common actuators, which are mounted to the rear section of the turbine shroud.

In the first alternative embodiment, the actuation of the movable first wall portions and the first exhaust shroud are simultaneous. The second alternative embodiment allows for separate control of the movable first wall portions and the first exhaust shroud.

According to a further preferred embodiment, the system comprises a central cone, and that the wall structure is positioned co-axially with the cone and is axially displacable relative to the cone. Preferably, the cone has a tapering radial extension from a portion with a maximum radial extension towards an end in the axial direction. Preferably, a rear end of the wall structure is arranged in the vicinity of the maximum radial extension of the cone in the axially advanced position.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a cross-section of a turbofan engine according to the invention during cruise;
- Figure 2A: is a partly cut view of a rear end of the turbofan engine 1 of Figure 1;
- Figure 2B: is an alternative configuration to figure 2A;
- Figure 3: shows a rear view of the exhaust nozzle in Fig.2A;
- Figure 4: shows a perspective view of a sector of the ramps in Fig.3;
- Figure 5: shows a cross-section of the rear end of the turbofan engine of Figure 1 during take-off; and
- Figure 6: shows a rear view of the exhaust nozzle in Fig.5;
- figure 7: shows a perspective view of a sector of the ramps in Fig.6;

### EMBODIMENTS OF THE INVENTION

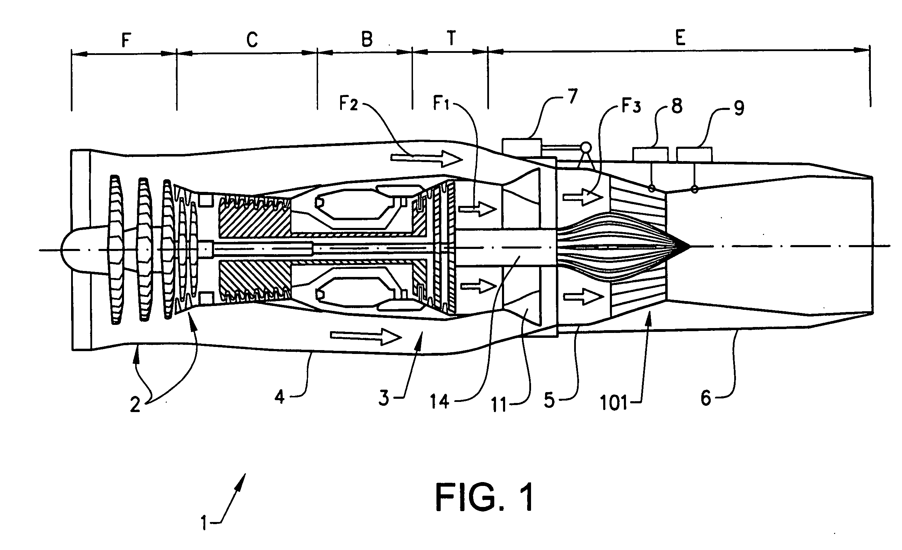

Figure 1 shows a schematic cross-section of a gas turbine engine 1 in the form of an aircraft engine according to the invention. More particularly, the aircraft engine constitutes a turbofan engine. The turbofan engine 1 comprises a fan section F, compressor section C, combustor section B, turbine section T and exhaust section E. The compressor section C is enclosed by a compressor shroud 2, while the turbine section T is enclosed by a turbine shroud 3. An incoming gas flow is divided into a central core flow F₁ and a fan flow F₂ after the fan section F. The central core flow F₁ enters the compressor section C while the fan flow F₂ bypasses the compressor section C, combustor section B and turbine section T by flowing between an external fan flow shroud 4 and the compressor shroud 2 and the turbine shroud 3. The core flow F₁ and fan flow F₂ are mixed downstream the turbine section T to an outlet flow F₃. A first flow mixer 11 is attached downstream of the turbine section T of the engine and configured for mixing the core flow F₁ and fan flow F₂. The exhaust section E is enclosed by a first and second exhaust shroud 5, 6.

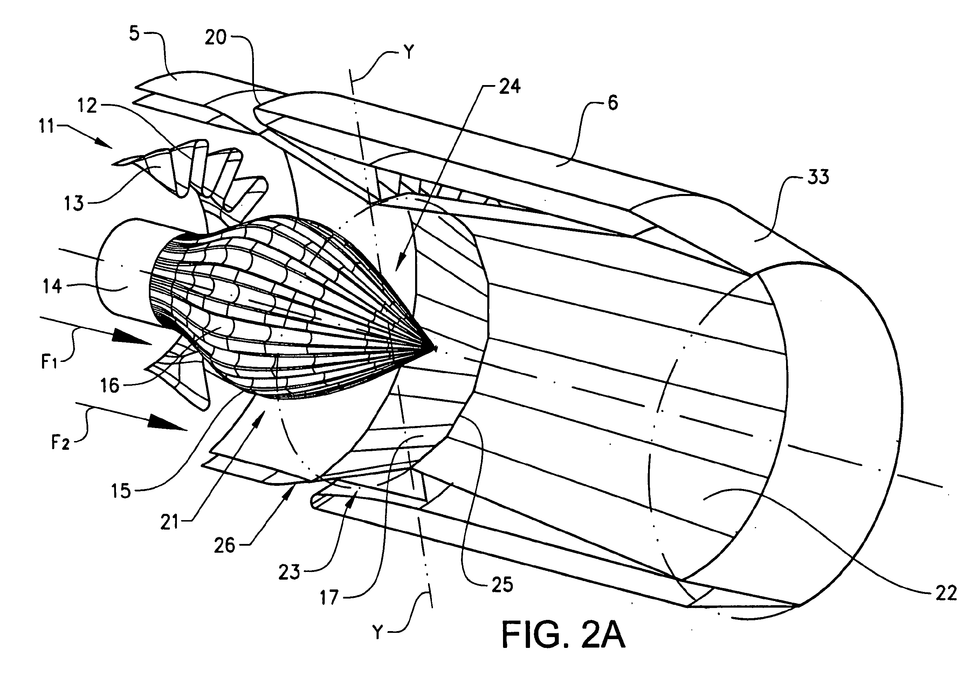

Figure 2A is a partly cut view of a rear end of the turbofan engine 1 of Figure 1. The first flow mixer 11 has a rear end 12 having a plurality of fixed wavelike lobes 13 and is attached around a central core 14 upstream of a bulb shaped thrust cone 15 located in an exhaust end of said turbofan engine 1.

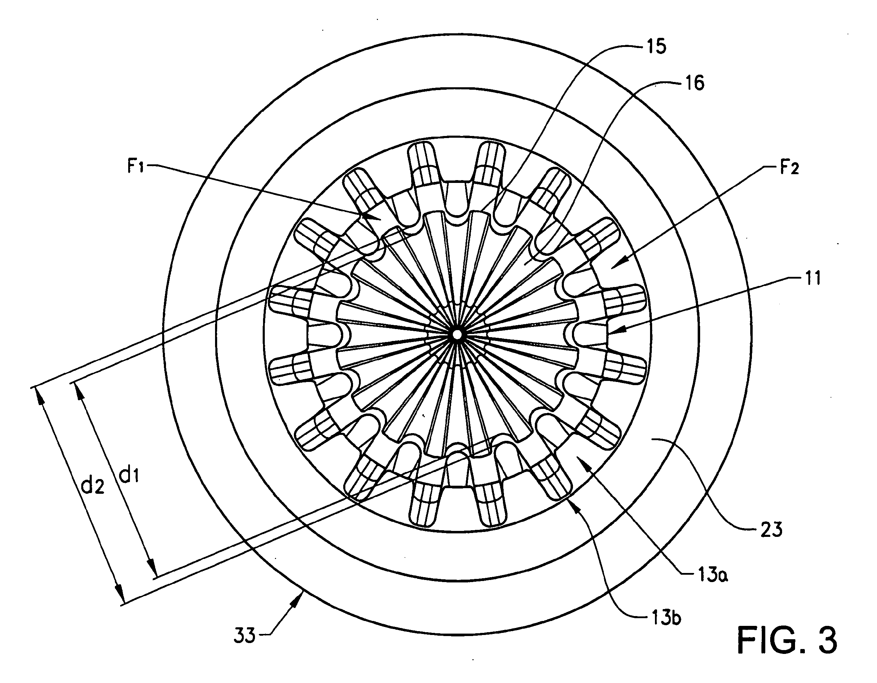

The first flow mixer 11 is mounted in a fixed position relative to the thrust cone 15. The bulb-shaped thrust cone 15 is provided with a plurality of longitudinal grooves 16 in its outer surface. Figure 3 shows a rear view of the exhaust nozzle in Figure 2A. In the embodiment shown, inner and outer lobes 13a, 13b are provided. Preferably, each groove 16 is indexed to coincide with each inner lobe section 13a of the first flow mixer 11. Thus, the effect of the inner lobe sections 13a, ie the effect of the depth of the lobes, is increased. Further, axial vortex structures are created, which will mix the flow in the center of the outlet. At a section X through the major, or maximum, diameter of the thrust cone 15, a circle with a diameter d₁ coinciding with the bottom of each groove is equal to a diameter d₂ coinciding with the innermost portions of the inner lobe sections 13a of the first flow mixer 11. Alternatively, the diameter d₁ may be equal to or even larger than the diameter d₂. Said first flow mixer 11 is contained within the first exhaust shroud 5 located between the turbine shroud 4 and the second exhaust shroud 6.

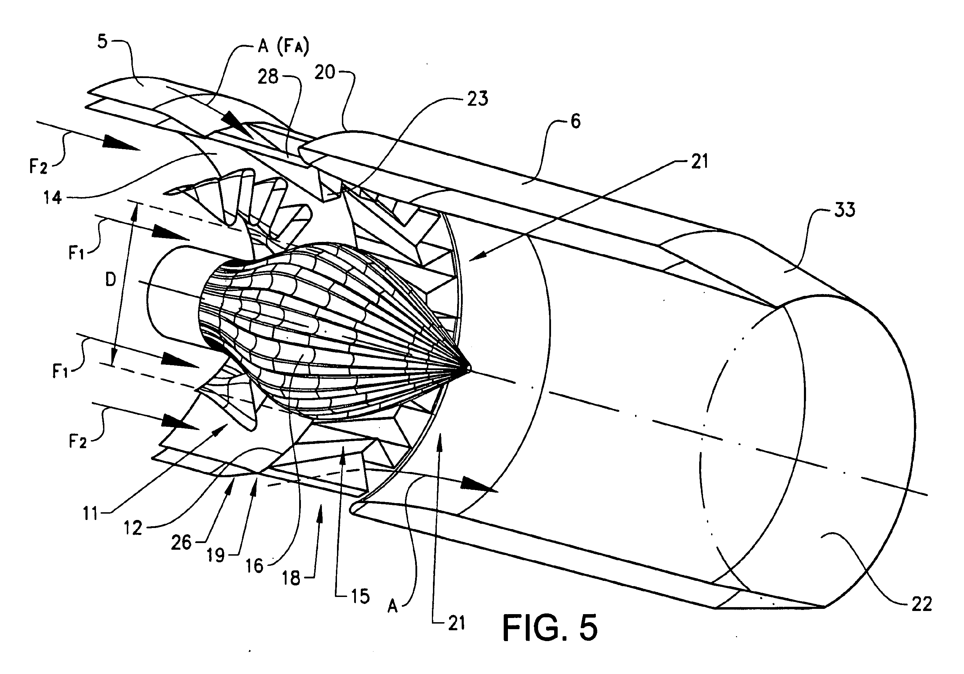

A system 101 for mixing gas flows is arranged downstream of the first flow mixer 11, see figure 1. The mixing system 101 comprises an annular wall structure 23, which internally delimits a first gas flow channel, see figure 2A. The mixing system 101 is configured for mixing the outlet flow F₃ from the first flow mixer 11 with a further gas flow in the form of ambient air. The wall structure 23 is movably arranged in an axial direction between a retracted position and an advanced position. The wall structure 23 is configured for allowing introduction of the ambient air F_{A} in the outlet gas flow F₃ in the advanced position, see figure 5. The arrow A indicates a flow F_{A} of ambient air introduced in the outlet gas flow F₃ via an ejector effect. The advanced position is advantageously used during take-off. Further, the wall structure 23 is configured for blocking any introduction of ambient air in the outlet gas flow F₃ in the retracted position, see figure 2A. The retracted position is advantageously used during cruising conditions.

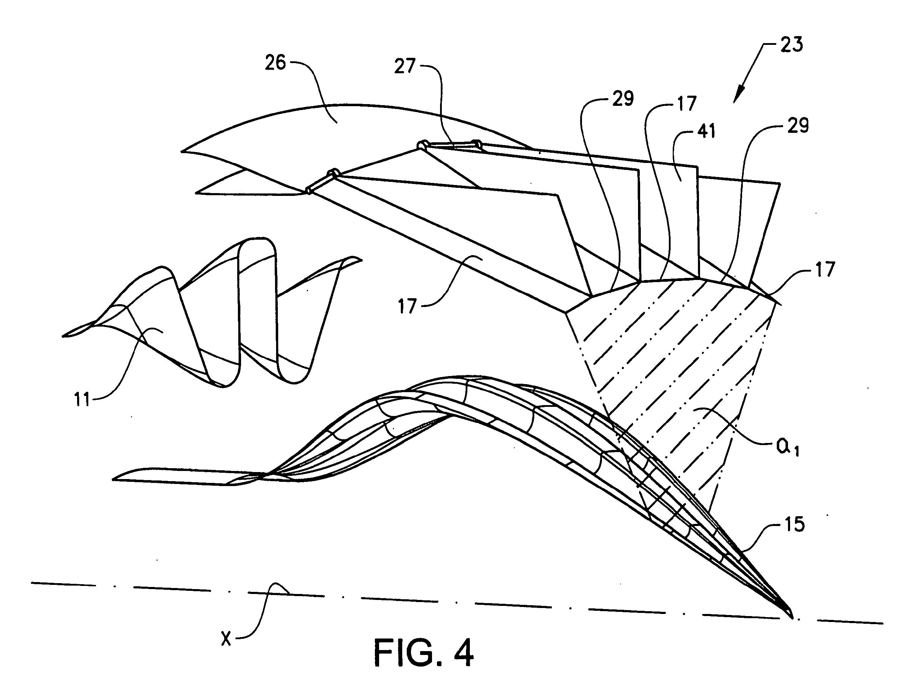

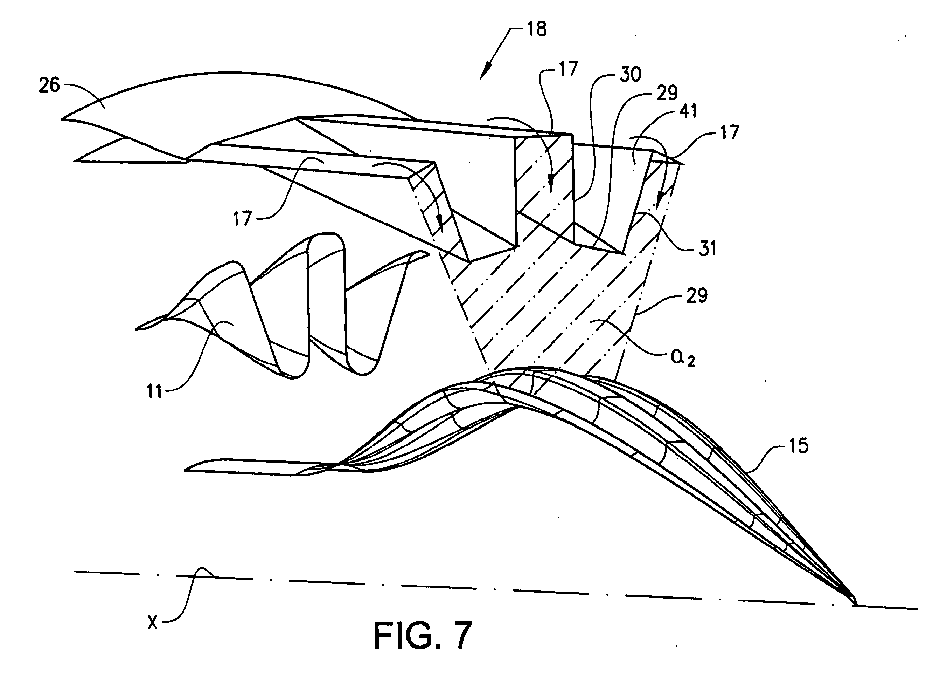

Reference will in the following be made to figures 4 and 7. The wall structure comprises a plurality of first wall portions 17,29. Every second first wall portion 17 in the circumferential direction is movably arranged in a radial direction of the annular wall structure. The radial movement is illustrated with arrows in figure 7. Further, every second first wall portion 29 in the circumferential direction is fixed in relation to the movable wall portions 17. The movably arranged wall portions 17 are adjustable between a first position (see figure 7), in which an edge, which forms an end in an axial direction of the annular wall structure, defines a first inner radius, and a second position (see figure 4), in which the wall portion edge defines a second inner radius.

The edges of the first wall portions 17,29 form a circumferentially substantially continuous and convergent nozzle when the movable first wall portions 17 are in the second position, see figure 4. The nozzle is coaxial with the bulb shaped thrust cone 15. On the other hand, the edges of adjacent movable first wall portions 17 are circumferentially spaced in the first position, see figure 7.

The movable first wall portions 17 are pivotable between the first position and the second position. More particularly, each of the movable first wall portions 17 is pivotable about an axis 27 extending at right angles relative to an axial direction X of the annular wall structure.

Further, the first wall portion edge extends in a plane at right angles relative to the axial direction X of the annular wall structure. Thus, the free edge is in parallel with the pivot axis. Further, each first wall portion 17 is defined by two parallel lateral edges, wherein the movable wall portion 17 has a rectangular shape.

The wall structure comprises a plurality of upright, second wall portions 41, wherein each first movable wall portion 17 is radially movably arranged between two adjacent second wall portions 41. The adjacent second wall portions 41 have opposite parallel guide surfaces 30 and opposite lateral edges of the first movable wall portion 17 is positioned in contact with, or in the close vicinity of, the guide surfaces of the second wall portions in both said first and second position.

The movably arranged first wall portions 17 form adjustable flow control means, or first ramps. In operation, the first ramps 17 form a combined flow mixer and ejector when the wall structure is in the advanced axial position (see figure 5), and it will be referred to as a "flow mixer" in the subsequent text.

The second exhaust shroud 6 is provided in the form of a cylindrical ejector shroud. At least a front section 20 of the second exhaust shroud 6 is supported concentrically around a central section 21 of the bulb shaped thrust cone 15. The second exhaust shroud 6 shown in Figure 2A is provided with second flow controlling means or ramps 22 arranged to be adjustable between a first position, forming a second nozzle continuous with the nozzle formed by the wall structure 23 in the retracted position, and a second position, forming a part of or located adjacent a substantially cylindrical, inner surface of the second exhaust shroud 6 (see Fig.5). The nozzle formed by the second ramps 22 is arranged to form a divergent nozzle for a supersonic flight. In their first position, the forward sections of the second ramps 22 are arranged in contact with or adjacent the rear sections of the first ramps 17 located in their respective second radial position. The inner diameter of the forward section of the second nozzle is equal to the corresponding diameter of the rear section of the first nozzle. In this way the exhaust stream may pass the joint between the convergent first nozzle and the divergent second nozzle with a minimum of turbulence or flow resistance added to the exhaust stream. The total length of the second exhaust nozzle is selected between 2-3 times the inner diameter of the second exhaust shroud 6. The second ramps 22 are provided with an acoustic liner in their internal surfaces.

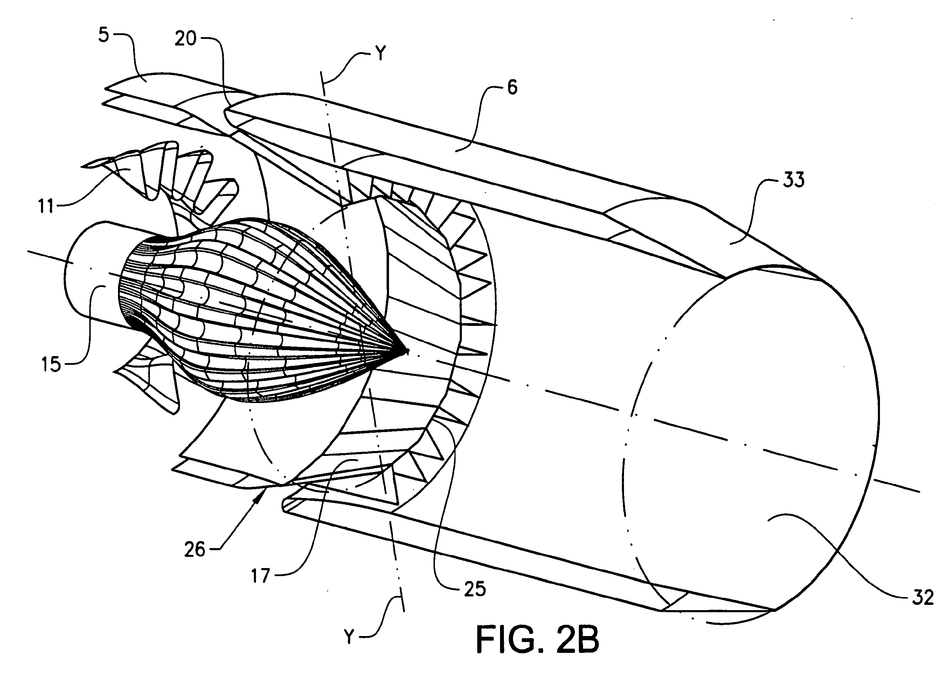

Figure 2B shows an embodiment provided with a first nozzle formed by the annular wall structure 23 only, wherein the second exhaust shroud comprises a substantially cylindrical internal surface 32. An internal acoustic liner is provided on the inner surface of the second exhaust shroud 6.

Thus, in their second position, the first ramps 17 are arranged to form part of a convergent nozzle 23 that is coaxial with and surrounding a rear convergent section 24 of the bulb shaped thrust cone 15, see figure 2A. The adjustable first ramps 17, in the form of movable control surfaces, are arranged to assume the second position shown in Figure 2A during cruise conditions. The end section 25 of this first nozzle 23 forms the narrowest flow area of the exhaust nozzle 23. in a section Y through this position (see reference numeral 25), the cross-sectional area of the nozzle, minus the area taken up by the thrust cone 15, is less than the available area for the fan flow F1 and the core flow F2 in a section taken through the first flow mixer 11.

Figure 4 shows a perspective view of a sector of the ramps in Figure 3. The adjustable first ramps 17 are shown in their second position, where they are located in line with the fixed first wall portions 29 to form the exhaust nozzle 23. In this figure the nozzle is shown without a number of parallel guide surfaces arranged on either side of the ramps 17 to guide their movement. The guide surfaces will be described in further detail below. The hatched area a₁ indicates a sector of the narrowest flow area of the exhaust nozzle 23 and of the first exhaust shroud 5 with the adjustable first ramps 17 are shown in their second position.

In their first position, shown in Figure 5, the first ramps 17 are arranged to form a second flow mixer 18 with its rear end 25 coaxial with and surrounding a maximum diameter section D of the bulb shaped thrust cone 15 in said first position. The rear ends the first ramps 17 are arranged in, or alternatively, immediately behind a radial plane through the maximum diameter section D of the bulb shaped thrust cone 15. The adjustable first ramps 17 are arranged to assume the first position during take-off conditions.

The first ramps 17 are attached to a rear section 26 of the first exhaust shroud 5 and extend in a diametric plane thereof. The first ramps 17 have a curved cross-section in a radial plane through the engine. Displacement of the first ramps 17 is achieved by arranging their front ends 19 so that each first ramp is pivotable about a tangential axis 27 located adjacent the outer diameter of the rear section 26 the first exhaust shroud 5. In this way the rear ends of the first ramps 17 can be displaced in a plane through the central axis of the turbofan engine and be placed either in a pivoted second position, forming a part of a conical nozzle 23, or in a level first position, substantially coaxial with and forming extensions 28 of the first exhaust shroud 5.

The exit centre area of the second flow mixer 18 and the area of the second exhaust shroud are substantially open, with the thrust cone marking the end of the engine centre body extending a short distance to the rear of the rearmost part of the second flow mixer 18. By having no centre body in this section, there is savings in weight and size. The second exhaust shroud extends to the rear of the exit of the second flow mixer 18 for a distance equal to about 2-3 times the diameter of the inside of the shroud. The internal surface of the second exhaust shroud is lined with acoustically treated material tuned to absorb noise emanating from the mixer/nozzle combination. The ejector shroud 6 receives and entrains ambient or outside air. This ambient air enters between the rear end of the first exhaust shroud and the forward end of the second exhaust, or ejector shroud through an opening, or ejector inlets formed by the first ramps and the fixed control surfaces after forward displacement of the first exhaust shroud.

The above arrangement is designed for maximum aerodynamic efficiency at aircraft cruise speed while at the same time exhibiting improved low speed characteristics. Entrained ambient air flow is mixed with the engine air flow (both core and fan) inside the ejector shroud by the flow mixer 18. As a result, the mixed gas flow exits the ejector at greatly reduced velocity and associated noise level during take-off. Acceptable thrust levels are maintained by increase in total gas flow which compensates for the reduced exit velocity. A rearmost section of the second exhaust shroud 6 can be provided with means 33 for reversing thrust.

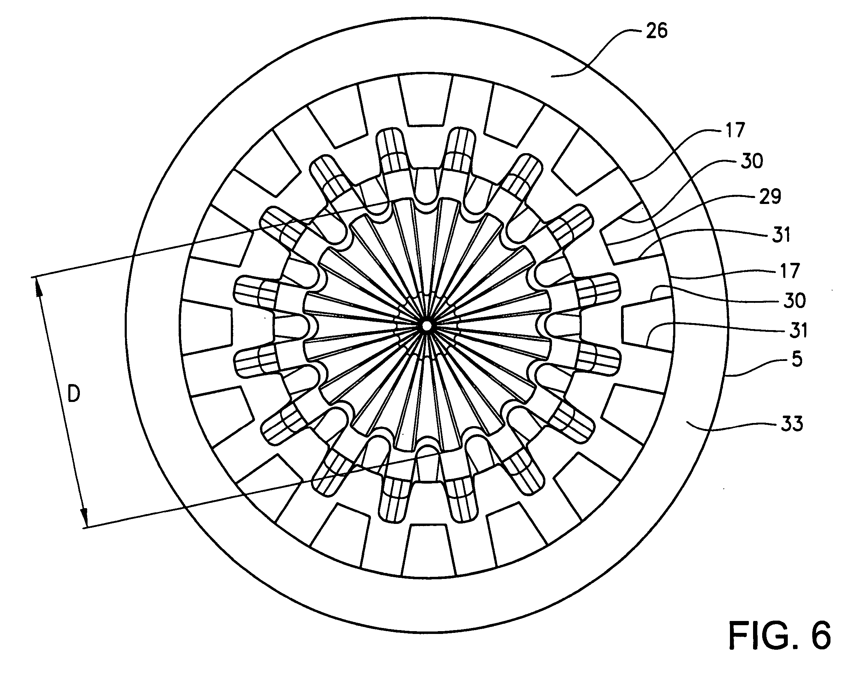

As shown in Figure 6, each pair of adjustable first ramps 17 is separated by a fixed first wall portion 29 located between said adjustable first ramps 17. The fixed first wall portions 29 are attached to the rear end 26 of the first exhaust shroud 5.

Each of the adjustable ramps 17 is arranged to be movable in a radial plane between opposite, parallel guide surfaces 30, 31 of the second wall portions 41. The guide surfaces 30, 31 are arranged parallel to the direction of movement of the ramps 17 and form side surfaces in the second flow mixer 18 when the ramps 17 are located in their first positions. As shown in Figure 3, each pair of guide surfaces 30, 31 associated with a first ramp 17 is rigidly interconnected by a fixed first wall portion 29. In other words, the rigid first wall portions 29 and the rigid second wall portions 41 together form a rigid element with regard to the movable first wall portions 17 (the rigid element in turn may be axially displaced relative to the stationary casing). The angled control surfaces 30, 31 cooperate with and guide the ramps 17 when they are displaced and angled inwards to form the first exhaust nozzle 23. In the same way as for the ramps 17, the width and curvature of each fixed first wall portion 29 in a radial plane through the engine is determined by the number of ramps 17 and the minimum and maximum diameter of the convergent nozzle 23 when the ramps 17 are pivoted into their second position. In the example shown, 16 ramps 17 and control surfaces are used.

Figure 7 shows a perspective view of a sector of the ramps in Figure 6. The adjustable first ramps 17 are shown in their first position, where they are located extending rearwards from the rear section 26 of the first exhaust shroud 5. In this position the adjustable first ramps 17 are substantially parallel with the longitudinal axis X of the engine. Each of the adjustable first ramps 17 is arranged to be movable in between the parallel guide surfaces 30, 31 connecting the fixed first wall portions 29. The guide surfaces 30, 31 are arranged parallel to the direction of movement of the first ramps 17 and form side surfaces in the second flow mixer 18 when the first ramps 17 are located in their first positions. The hatched area a₂ indicates a sector of the narrowest flow area of the exhaust nozzle 23 and of the first exhaust shroud 5 with the adjustable first ramps 17 are shown in their second position.

The system 101 comprises a link arrangement adapted to displace the movable first wall portions 17 between the first and second radial positions as the wall structure is advanced and retracted, respectively between the axial positions. The linkages for displacement of the first ramps 17 during displacement of the first exhaust shroud 5 are schematically illustrated in Figure 1. A first actuator 7 is arranged for axial displacement of the first exhaust shroud 5. A second actuator 8 is arranged for simultaneous displacement of the first ramps 17.

The invention is not limited to the examples described above, but may be varied freely within the scope of the appended claims. For instance, the center body (the cone) may be displaceable relative to an outer shroud in the axial direction.

Further, a plurality of wall structure designs is feasible. According to one example, the second wall portions (which are rigid with regard to the radial movement of the ramps) may be formed by v-shaped plates, wherein each single ramp is provided between and movable relative to two adjacent v-shaped plates.

## Claims

1. A system (101) for mixing gas flows in a gas turbine engine (1), wherein the system (101) comprises an annular wall structure (23), which internally delimits a channel for a first gas flow, wherein the wall structure (23) comprises a plurality of first wall portions (17,29), that at least one (17) of the first wall portions is movably arranged in a radial direction between a first position and a second position for mixing an external gas flow with the first gas flow **characterized in that** the wall structure (23) is movably arranged between an advanced axial position and a retracted axial position, that the advanced axial position corresponds to that the movable first wall portions (17) are arranged in the first radial position and the retracted axial position corresponds to that the movable first wall portions (17) are arranged in the second radial position.

2. A system according to claim 1, **characterized in that** the first wall portions (17,29) form a circumferentially continuous nozzle when the movable first wall portion (17) is in the second position.

3. A system according to claim 1 or 2, **characterized in that** there is a gap between two adjacent movable first wall portions (17) in a circumferential direction of the annular wall structure (23) when they are arranged in the first position.

4. A system according to any preceding claim, **characterized in that**, an edge of the movable first wall portion (17), which forms an end in an axial direction of the annular wall structure (23), defines a first inner radius in the first position, and a second inner radius in the second position, wherein the first inner radius is larger than the second inner radius.

5. A system according to any preceding claim, **characterized in that** the movable first wall portion (17) is pivotable between the first position and the second position.

6. A system according to 5, **characterized in that** each of the movable first wall portions (17) is pivotable about an axis (27) extending at right angles relative to an axial direction of the annular wall structure (23).

7. A system according to claim 4 and 6, **characterized in that** the first wall portion edge extends in a plane at right angles relative to the axial direction.

8. A system according to any preceding claim, **characterized in that** each movable first wall portion (17) is defined by two parallel lateral edges.

9. A system according to any preceding claim, **characterized in that** the wall structure (23) comprises a plurality of second wall portions (41), that each first movable wall portion (17) is radially movably arranged between two adjacent second wall portions.

10. A system according to claim 9, **characterized in that** the adjacent second wall portions (41) have opposite parallel guide surfaces (30,31) and that opposite lateral edges of the movable first wall portion (17) is positioned in contact with, or in the close vicinity of, the guide surfaces of the second wall portions in both said first and second position.

11. A system according to any preceding claim, **characterized in that** every second first wall portion (29) in a circumferential direction is fixed with regard to the movable first wall portions (17).

12. A system according to any preceding claim, **characterized in that** the system comprises a link arrangement (8) adapted to displace the movable first wall portions (17) between the first and second radial positions as the wall structure (23) is advanced and retracted, respectively between the axial positions.

13. A system according to any preceding claim, **characterized in that** the wall structure (23) is configured to allow mixing of the first gas flow with the external second gas flow when the first movable wall portions (17) are in the first radial position.

14. A system according to any preceding claim, **characterized in that** the wall structure (23) is configured to obstruct mixing of the first gas flow with the external second gas flow when the first movable wall portions (17) are in the second radial position.

15. A system according to claim 14, **characterized in that** the system comprises an external shroud (5,6), that the shroud is provided with at least one opening for inlet of the external gas flow, and that the opening is closed by the wall structure when the wall structure is in the retracted axial position.

16. A system according to any preceding claim, **characterized in that** the system comprises a central cone (15), and that the wall structure is positioned co-axially with the cone and is axially displacable relative to the cone.

17. A system according to claim 16, **characterized in that** the cone (15) has a tapering radial extension from a portion with a maximum radial extension towards an end in the axial direction.

18. A system according to claim 17, **characterized in that** a rear end of the wall structure (23) is arranged in the vicinity of the maximum radial extension of the cone in the axially advanced position.

19. A gas turbine engine **characterized in that** it comprises the mixing system according to any preceding claim, and that the mixing system is arranged downstream of a turbine section (T) in the gas turbine engine.

20. A gas turbine engine according to claim 19 **characterized in that** the second gas flow is ambient air, which is introduced in the first gas flow via an ejector effect.

21. A gas turbine engine according to claim 19 or 20 **characterized in that** the first gas flow comprises a core gas flow from the turbine section.

22. An aircraft engine comprising the gas turbine engine according to any one of claims 19-21, **characterized in that** the movable first wall portions are configured to assume the first position during take-off and the second position during cruise.

## Patentansprüche

1. System (101) zum Mischen von Gasströmungen in einem Gasturbinentriebwerk (1), wobei das System (101) einen ringförmigen Wandaufbau (23) umfasst, der innen einen Kanal für eine erste Gasströmung begrenzt, wobei der Wandaufbau (23) eine Vielzahl von ersten Wandabschnitten (17, 29) umfasst, wobei wenigstens einer (17) der ersten Wandabschnitte in einer Radialrichtung zwischen einer ersten Position und einer zweiten Position bewegbar angeordnet ist, um eine äußere Gasströmung mit der ersten Gasströmung zu mischen,
**dadurch gekennzeichnet, dass** der Wandaufbau (23) zwischen einer vorverlegten Axialposition und einer zurückgezogenen Axialposition bewegbar angeordnet ist, dass die vorverlegte Axialposition dem entspricht, dass die bewegbaren ersten Wandabschnitte (17) in der ersten Radialposition angeordnet sind, und dass die zurückgezogene Axialposition dem entspricht, dass die bewegbaren ersten Wandabschnitte (17) in der zweiten Radialposition angeordnet sind.

2. System nach Anspruch 1, **dadurch gekennzeichnet, dass** die ersten Wandabschnitte (17, 29) eine in Umfangsrichtung durchgehende Düse bilden, wenn sich der bewegbare erste Wandabschnitt (17) in der zweiten Position befindet.

3. System nach Anspruch 1 oder 2, **dadurch gekennzeichnet, dass** zwischen zwei angrenzenden bewegbaren ersten Wandabschnitten (17) in Umfangsrichtung des ringförmigen Wandaufbaus (23) eine Lücke vorhanden ist, wenn sie in der ersten Position angeordnet sind.

4. System nach irgendeinem vorhergehenden Anspruch, **dadurch gekennzeichnet, dass** ein Rand des bewegbaren ersten Wandabschnitts (17), der ein Ende in einer Axialrichtung des ringförmigen Wandaufbaus (23) bildet, einen ersten inneren Radius in der ersten Position und einen zweiten inneren Radius in der zweiten Position definiert, wobei der erste innere Radius größer ist als der zweite innere Radius.

5. System nach irgendeinem vorhergehenden Anspruch, **dadurch gekennzeichnet, dass** der bewegbare erste Wandabschnitt (17) zwischen der ersten Position und der zweiten Position verschwenkbar ist.

6. System nach Anspruch 5, **dadurch gekennzeichnet, dass** jeder der bewegbaren ersten Wandabschnitte (17) um eine Achse (27) verschwenkbar ist, die sich im rechten Winkel bezüglich einer Axialrichtung des ringförmigen Wandaufbaus (23) erstreckt.

7. System nach Anspruch 4 und 6, **dadurch gekennzeichnet, dass** sich der Rand des ersten Wandabschnitts in einer Ebene erstreckt, die im rechten Winkel bezüglich der Axialrichtung verläuft.

8. System nach irgendeinem vorhergehenden Anspruch, **dadurch gekennzeichnet, dass** jeder bewegbare erste Wandabschnitt (17) durch zwei parallele Seitenränder definiert wird.

9. System nach irgendeinem vorhergehenden Anspruch, **dadurch gekennzeichnet, dass** der Wandaufbau (23) eine Vielzahl von zweiten Wandabschnitten (41) umfasst und dass jeder erste bewegbare Wandabschnitt (17) zwischen zwei angrenzenden zweiten Wandabschnitten radial bewegbar angeordnet ist.

10. System nach Anspruch 9, **dadurch gekennzeichnet, dass** die angrenzenden zweiten Wandabschnitte (41) gegenüberliegende parallele Führungsflächen (30, 31) aufweisen und dass gegenüberliegende Seitenränder des bewegbaren ersten Wandabschnitts (17) sowohl in der ersten als auch in der zweiten Position in Kontakt mit oder in unmittelbarer Nähe der Führungsflächen der zweiten Wandabschnitte angeordnet sind.

11. System nach irgendeinem vorhergehenden Anspruch, **dadurch gekennzeichnet, dass** jeder zweite erste Wandabschnitt (29) in Umfangsrichtung bezüglich der bewegbaren ersten Wandabschnitte (17) befestigt ist.

12. System nach irgendeinem vorhergehenden Anspruch, **dadurch gekennzeichnet, dass** das System eine Verbindungsanordnung (8) umfasst, die so ausgelegt ist, dass sie die bewegbaren ersten Wandabschnitte (17) zwischen der ersten und zweiten Radialposition verschiebt, wenn der Wandaufbau (23) zwischen den axialen Positionen vorverlegt bzw. zurückgezogen wird.

13. System nach irgendeinem vorhergehenden Anspruch, **dadurch gekennzeichnet, dass** der Wandaufbau (23) so ausgebildet ist, dass er ein Mischen der ersten Gasströmung mit der äußeren zweiten Gasströmung ermöglicht, wenn sich die ersten bewegbaren Wandabschnitte (17) in der ersten Radialposition befinden.

14. System nach irgendeinem vorhergehenden Anspruch, **dadurch gekennzeichnet, dass** der Wandaufbau (23) so ausgebildet ist, dass er ein Mischen der ersten Gasströmung mit der äußeren zweiten Gasströmung blockiert, wenn sich die ersten bewegbaren Wandabschnitte (17) in der zweiten Radialposition befinden.

15. System nach Anspruch 14, **dadurch gekennzeichnet, dass** das System eine äußere Abdeckung (5, 6) umfasst, dass die Abdeckung mit wenigstens einer Öffnung für einen Einlass der äußeren Gasströmung versehen ist und dass die Öffnung durch den Wandaufbau geschlossen ist, wenn der Wandaufbau sich in der zurückgezogenen Axialposition befindet.

16. System nach irgendeinem vorhergehenden Anspruch, **dadurch gekennzeichnet, dass** das System einen zentralen Konus (15) umfasst, und dass der Wandaufbau koaxial zu dem Konus angeordnet ist und axial bezüglich des Konus verschiebbar ist.

17. System nach Anspruch 16, **dadurch gekennzeichnet, dass** der Konus (15) eine sich verjüngende radiale Erstreckung von einem Abschnitt mit einer maximalen radialen Erstreckung aus in Richtung eines Endes in der Axialrichtung aufweist.

18. System nach Anspruch 17, **dadurch gekennzeichnet, dass** in der axial vorverlegten Position ein hinteres Ende des Wandaufbaus (23) in der Nähe der maximalen radialen Erstreckung des Konus angeordnet ist.

19. Gasturbinentriebwerk, **dadurch gekennzeichnet, dass** es das Mischsystem nach irgendeinem vorhergehenden Anspruch umfasst und dass das Mischsystem stromabwärts eines Turbinenabschnitts (T) in dem Gasturbinentriebwerk angeordnet ist.

20. Gasturbinentriebwerk nach Anspruch 19, **dadurch gekennzeichnet, dass** die zweite Gasströmung Umgebungsluft ist, die in die erste Gasströmung über eine Ejektorwirkung eingeführt wird.

21. Gasturbinentriebwerk nach Anspruch 19 oder 20, **dadurch gekennzeichnet, dass** die erste Gasströmung eine Kerngasströmung von dem Turbinenabschnitt umfasst.

22. Flugzeugtriebwerk mit einem Gasturbinentriebwerk nach einem der vorhergehenden Ansprüche 19-21, **dadurch gekennzeichnet, dass** die bewegbaren ersten Wandabschnitte so ausgebildet sind, dass sie während des Starts die erste Position und während des Reisefluges die zweite Position annehmen.

## Revendications

1. Système (101) pour mélanger des écoulements gazeux dans un moteur de turbine à gaz (1), le système (101) comportant une structure de paroi annulaire (23), qui délimite intérieurement un canal pour un premier écoulement gazeux, la structure de paroi (23) comportant une pluralité de premières parties de paroi (17, 29), de telle sorte qu'au moins une (17) des premières parties de paroi est agencée de manière mobile dans une direction radiale entre une première position et une seconde position pour mélanger un écoulement gazeux externe avec le premier écoulement gazeux, **caractérisé en ce que** la structure de paroi (23) est agencé de manière mobile entre une position axiale avancée et une position axiale rétractée, **en ce que** la position axiale avancée correspond à celle des premières parties de paroi mobiles (17) qui sont agencées dans la première position radiale, et la position axiale rétractée correspond à celle des premières parties de paroi mobiles (17) qui sont agencées dans la seconde position radiale.

2. Système selon la revendication 1, **caractérisé en ce que** les premières parties de paroi (17, 9) forment une buse continue de manière circonférentielle lorsque la première partie de paroi mobile (17) est dans la seconde position.

3. Système selon la revendication 1 ou 2, **caractérisé en ce qu'**il y a un espace entre deux premières parties de paroi mobiles adjacentes (17) dans une direction circonférentielle de la structure de paroi annulaire (23) lorsqu'elles sont agencées dans la première position.

4. Système selon l'une quelconque des revendications précédentes, **caractérisé en ce qu'**un bord de la première partie de paroi mobile (17), qui forme une extrémité dans une direction axiale de la structure de paroi annulaire (23), définit un premier rayon intérieur dans la première position, et un second rayon intérieur dans la seconde position, le premier rayon intérieur étant plus grand que le second rayon intérieur.

5. Système selon l'une quelconque des revendications précédentes, **caractérisé en ce que** la première partie de paroi mobile (17) peut pivoter entre la première position et la seconde position.

6. Système selon la revendication 5, **caractérisé en ce que** chacune des premières parties de paroi mobiles (17) peut pivoter autour d'un axe (27) s'étendant perpendiculairement par rapport à une direction axiale de la structure de paroi annulaire (23).

7. Système selon l'une quelconque des revendications 4 et 6, **caractérisé en ce que** le bord de première partie de paroi s'étend dans un plan perpendiculaire par rapport à la direction axiale.

8. Système selon l'une quelconque des revendications précédentes, **caractérisé en ce que** chaque première partie de paroi mobile (17) est définie par deux bords latéraux parallèles.

9. Système selon l'une quelconque des revendications précédentes, **caractérisé en ce que** la structure de paroi (23) comporte une pluralité de secondes parties de paroi (41), chaque première partie de paroi mobile (17) étant agencée mobile radialement entre deux secondes parties de paroi adjacentes.

10. Système selon la revendication 9, **caractérisé en ce que** les secondes parties de paroi adjacentes (41) ont des surfaces de guidage parallèles opposées (30, 31), et **en ce que** des bords latéraux opposés de la première partie de paroi mobile (17) sont positionnés en contact avec ou à proximité étroite des surfaces de guidage des secondes parties de paroi dans lesdites première et seconde positions.

11. Système selon l'une quelconque des revendications précédentes, **caractérisé en ce que** chaque seconde première partie de paroi (29), dans une direction circonférentielle, est fixe par rapport aux premières parties de paroi mobiles (17).

12. Système selon l'une quelconque des revendications précédentes, **caractérisé en ce que** le système comporte un agencement de liaison (8) adapté pour déplacer les premières parties de paroi mobiles (17) entre les première et seconde positions radiales lorsque la structure de paroi (23) est avancée et rétractée, respectivement, entre les positions axiales

13. Système selon l'une quelconque des revendications précédentes, **caractérisé en ce que** la structure de paroi (23) est configurée pour permettre un mélange du premier écoulement gazeux avec le second écoulement gazeux externe lorsque les premières parties de paroi mobiles (17) sont dans la première position radiale

14. Système selon l'une quelconque des revendications précédentes, **caractérisé en ce que** la structure (23) est configurée pour empêcher un mélange du premier écoulement gazeux avec le second écoulement gazeux externe lorsque les premières parties de paroi mobiles (17) sont dans la seconde position radiale.

15. Système selon la revendication 14, **caractérisé en ce que** le système comporte une enveloppe externe (5, 6), l'enveloppe étant munie d'au moins une ouverture pour une entrée de l'écoulement gazeux externe, et **en ce que** l'ouverture est fermée par la structure de paroi lorsque la structure de paroi est dans la position axiale rétractée

16. Système selon l'une quelconque des revendications précédentes, **caractérisé en ce que** le système comporte un cône central (15), et **en ce que** la structure de paroi est positionnée coaxialement par rapport au cône, et peut-être déplacée axialement par rapport au cône.

17. Système selon la revendication 16, **caractérisé en ce que** le cône (15) a une étendue radiale conique depuis une partie ayant une étendue radiale maximum vers une extrémité dans la direction axiale

18. Système selon la revendication 17, **caractérisé en ce qu'**une extrémité arrière de la structure de paroi (23) est agencé à proximité de l'étendue radiale maximum du cône dans la position avancée axialement.

19. Moteur de turbine à gaz, **caractérisé en ce qu'**il comporte le système de mélange selon l'une quelconque des revendications précédentes, et **en ce que** le système de mélange est agencé en aval d'un tronçon de turbine (T) dans le moteur de turbine à gaz.

20. Moteur de turbine à gaz selon la revendication 19, **caractérisé en ce que** le second écoulement gazeux est de l'air ambiant, qui est introduit dans le premier écoulement gazeux via un effet d'éjecteur.

21. Moteur de turbine à gaz selon la revendication 19 ou 20, **caractérisé en ce que** le premier écoulement gazeux comporte un écoulement gazeux de coeur depuis le tronçon de turbine.

22. Moteur d'avion comportant le moteur de turbine à gaz selon l'une quelconque des revendications 19 à 21, **caractérisé en ce que** les premières parties de paroi mobiles sont configurées pour prendre la première position pendant un décollage, et la seconde position pendant un vol de croisière.
